# EUROPÄISCHE PATENTSCHRIFT

(11) **EP 1 391 592 B1**
(45) Veröffentlichungstag und Bekanntmachung des Hinweises auf die Patenterteilung: **20.04.2005**
(21) Anmeldenummer: 03012341.8
(22) Anmeldetag: 30.05.2003
(51) Int. Cl.: F01N 11/00, F01N 3/08, F02D 41/02

(54) **Verfahren zum Betrieb eines magerlauffähigen Verbrennungsmotors mit einem Abgasreinigungssystem**
Method for operating a lean burn internal combustion engine having an exhaust gas purification system
Procédé de commande d'un moteur à combustion interne avec un système de purification de gaz d'échappement

(30) Priorität: 12.08.2002 DE 10237382
(43) Veröffentlichungstag der Anmeldung: 25.02.2004
(73) Patentinhaber: Volkswagen AG, 38436 Wolfsburg (DE)
(72) Erfinder: Pott, Ekkehardt, 38518 Gifhorn (DE); Lang, Axel, 38304 Wolfenbüttel (DE)
(74) Vertreter: Pohlmann, Bernd Michael, Dr.

(56) Entgegenhaltungen:
- EP-A- 1 054 141
- EP-A- 1 081 346
- EP-A- 1 136 670
- WO-A-01/53672
- DE-A- 19 836 955

## Beschreibung

Die Erfindung betrifft ein Verfahren zum Betrieb eines magerlauffähigen Verbrennungsmotors mit einem Abgasreinigungssystem sowie einen Verbrennungsmotor zur Durchführung des Verfahrens gemäß den Oberbegriffen der unabhängigen Patentansprüche.

Zur Abgasreinigung sind für magerlaufende Verbrennungsmotoren Katalysatorsysteme mit Kombinationen aus motornahen Vorkatalysatoren und stromab dieser angeordnete Hauptkatalysatoren bekannt. Diese Hauptkatalysatoren sind üblicherweise als NOx-Speicherkatalysatoren ausgebildet, da aufgrund des Sauerstoffüberschusses bei einem mageren Abgas höhere Stickoxid (NOx)-Emissionen auftreten, die mit den konventionellen Abgasreinigungsmaßnahmen, wie beispielsweise einem 3-Wege-Katalysator, nicht in einem akzeptablen Ausmaß reduziert werden können. Derartige Abgasreinigungssysteme sind in besonderem Maße einer Deaktivierung durch thermische Alterung aufgrund hoher Temperaturen und eines hohen Restsauerstoffgehalts der Abgase unterworfen. Die thermische Alterung betrifft zum einen in geringerem Maße die maximal erreichbare Konvertierungsleistung des Systems, zum anderen weitaus stärker die Anspringtemperatur (light-off-Temperatur), d. h. diejenige Katalysatortemperatur, bei der ein Katalysator für eine Abgaskomponente eine Konvertierungsleistung von 50 % erreicht. Bei gealterten Katalysatortemperaturen verschiebt sich diese Anspringtemperatur in Richtung höherer Temperaturen, so dass sich in einem Schwachlastbetrieb mit resultierenden niedrigen Abgas- und Katalysatortemperaturen bei thermisch gealterten Katalysatorsystemen ein besonders ausgeprägter Einbruch der Konvertierungsleistung ergibt. Insbesondere im sogenannten Schichtbetrieb sinken die Abgas- und Katalysatortemperaturen dabei stärker ab als im Homogenbetrieb - es werden bis < 150 K Temperaturunterschied vor dem Vorkatalysator im Leerlauf zwischen Schicht- und Homogenbetrieb beobachtet. Ein geschädigter Vorkatalysator kann daher bei derartigen Betriebsweisen schnell auf eine Temperatur unterhalb der Anspringtemperatur auskühlen und die Reinigungsleistung des Gesamtsystems beeinträchtigen. Im Stand der Technik wird daher die separate Diagnose von Vorkatalysatoren seit langem behandelt.

Aus der DE 42 011 36 A1 ist bereits ein Verfahren zur Überwachung einer katalytischen Abgasreinigungsanlage eines Verbrennungsmotors bekannt, welches die separate Überwachung eines zur Abgasreinigungsanlage gehörenden Vorkatalysators ermöglicht. Die Überwachung erfolgt dabei mittels Temperaturmessung an einer oder mehreren Stellen der Abgasreinigungsanlage und Ausweitung der Temperaturmesswerte und/oder deren zeitlicher Verläufe und/oder deren Korrelation. Hierbei erfolgt mindestens eine Temperaturmessung direkt im Vorkatalysator, wobei separat für den Vorkatalysator eine Auswertung und Überwachung vorgenommen wird.

Ferner ist aus der DE 197 58 154 A1 ein Verfahren zur Überwachung der Leistung eines Katalysators bekannt, bei dem eine Katalysatorverschlechterung aus der Energiemenge erkannt wird, die vom Abgas auf den Katalysator bzw. das Katalysatormaterial übertragen wird, bevor der Katalysator anspringt. Hierbei wird das Signal eines Kohlenwasserstoffsensors vor dem Anspringen des Katalysators mit dem Signal, nachdem der Katalysator die Betriebstemperatur erreicht hat, verglichen.

Zur Diagnose eines Vorkatalysators ist ferner aus der EP 1052385 A2 ein Verfahren bekannt, bei dem eine Kraftstoffzufuhr in den Abgastrakt stromauf des Katalysators erfolgt. Der Temperaturverlauf des Abgases stromab des Katalysators wird überwacht und bei einem unter einem Schwellwert liegenden Temperaturanstieg der Katalysator als defekt diagnostiziert.

Zur Diagnose des Zustandes eines im Abgasstrang stromaufwärts eines NOx-Speicherkatalysators angeordneten Vorkatalysators ist aus der DE 101 14 456 A1 bekannt, die vor dem NOx-Speicherkatalysator gemessene NOx-Abgaskonzentration heranzuziehen.

Als weiteres Verfahren zur Diagnose der Konvertierungsleistung von Vorkatalysatoren ist beispielsweise aus der DE 43 389 17 A1 bekannt, dem Vorkatalysator jeweils eine Lambda-Sonde vor- und nachzuschalten und durch Vergleich der Sondensignale vor und nach dem Vorkatalysator die Sauerstoffspeicherfähigkeit (OSC) des Vorkatalysators zu ermitteln. Eine Schädigung der Konvertierungsleistung des Vorkatalysators wird dabei mit einer Abnahme der Sauerstoffspeicherfähigkeit korreliert. Für einen Magerbetrieb ist dieses Verfahren nicht geeignet.

Die Überwachung der Aktivität von NOx-Speicherkatalysatoren erfolgt im Stand der Technik durch Ermittlung der NOx-Speicherfähigkeit, vorzugsweise durch direkte Messung über einen NOx-Sensor oder indirekt über eine Überwachung der Regenerationsphase über ein Lambdasondensignal und den Vergleich mit einer modellierten oder anderweitig ermittelten NOx-Speicherfähigkeit eines ungeschädigten NOx-Speicherkatalysators. Da der verbrauchsgünstige Magerbetrieb nur bei gleichzeitig eingehaltenen Emissionsgrenzwerten zugelassen werden kann, wird unter Berücksichtigung der Temperatur des NOx-Speicherkatalysators sowie ggf. weiterer Grössen ein Magerbetriebstemperaturfenster des NOx-Speicherkatalysators festgelegt, innerhalb dessen Grenzen eine ausreichende NOx-Speicheraktivität gewährleistet ist. Hiermit wird insbesondere der Effekt einer thermischen Alterung des NOx-Speicherkatalysators berücksichtigt, der sich in einer Verkleinerung des NOx-Speichertemperaturfensters zeigt.

Bei einem Abgasreinigungssystem, das aus einem Vorkatalysator und einem stromabwärts des Vorkatalysators angeordneten NOx-Speicherkatalysator besteht, kann bei niedrigen Temperaturen von weniger als 350 ° Celsius und einem deaktivierten Vorkatalysator eine Deaktivierung des NOx-Speicherkatalysators auftreten, da bei diesen Temperaturen und einer hohen Kohlenwasserstoffkonzentration stromauf des NOx-Speicherkatalysators die NO → NO2-Oxidation massiv behindert wird. Da nur NO2 und nicht das überwiegend vom Motor emittierte und im Rohabgas vorliegende NO an den Speicherkomponenten des NOx-Speicherkatalysators eingelagert werden kann, nimmt als Folge dieser geringeren NO2-Bildung auch die NOx-Einlagerungsrate im NOx-Speicherkatalysator ab. Durch eine Überwachung der NOx-Speicheraktivität des NOx-Speicherkatalysators allein kann eine derartige Verringerung der Reinigungseffizienz des NOx-Speicherkatalysators durch den zu hohen Kohlenwasserstoffschlupf am Vorkatalysator nicht von einer durch thermische Alterung verursachten echten NOx-Deaktivierung unterschieden werden. Besonders kritisch sind hier daher Betriebszustände, bei denen aufgrund eines Schwachlastbetriebs ein deaktivierter Vorkatalysator schnell unter seiner Anspringtemperatur auskühlt, d.h. bei Temperaturen in einem Bereich > 280....350 ° Celsius, während der NOx-Speicherkatalysator sich noch oberhalb des unteren Endes seines NOx-Speichertemperaturfensters befindet, d.h. in einem Temperaturbereich zwischen 260 und 330 ° Celsius. Daher kann eine Koppelung der Magerbetriebszulassung an die in einem Tieftemperaturbereich des NOx-Speicherkatalysators, insbesondere bei einer Temperatur von < 330 ° Celsius ermittelte NOx-Speicherfähigkeit zu einem Mehrverbrauch an Kraftstoff führen.

Die aus dem Stand der Technik bekannten Verfahren und Vorrichtungen zur Diagnose eines Vorkatalysators in einem aus einem Vorkatalysator und einem stromabwärts des Vorkatalysators angeordneten NOx-Speicherkatalysator bestehenden Abgasreinigungssystems sind aufwendig und auch nicht für jeden Deaktivierungsfall des Vorkatalysators hinreichend genau.

Ferner führen die bekannten Verfahren zum Betrieb eines magerlauffähigen Verbrennungsmotors mit einem zugeordneten Abgasreinigungssystem, welches einen Vorkatalysator und einen stromabwärts des Vorkatalysators angeordneten NOx-Speicherkatalysator umfasst, im Tieftemperaturbereich des NOx-Speicherkatalysators bei mangelhafter Berücksichtigung der Auswirkung eines deaktivierten Vorkatalysators auf das Speicherverhalten des stromab angeordneten NOx-Speicherkatalysators zu einer unnötig starken Einschränkung des verbrauchsgünstigen Magerbetriebs.

Das der Erfindung zugrundeliegende Problem besteht daher bei einem Verfahren zum Betrieb eines gattungsgemäßen Verbrennungsmotors in der Schaffung einer einfachen, aber ausreichend genauen und sicheren Diagnosemöglichkeit eines zugeordneten Abgasreinigungssystems, welches einen Vorkatalysator und einen NOx-Speicherkatalysator umfasst.

Ein weiteres zu lösendes Problem besteht in der Schaffung einer einfachen und verbrauchsgünstigen Möglichkeit zur Einhaltung vorgebbarer Schadstoffkonvertierungsraten und einem gegenüber dem Stand der Technik angehobenen Magerbetriebsanteil.

Die angegebenen Probleme werden jeweils durch die Merkmale der unabhängigen Patentansprüche gelöst.

Erfindungsgemäß werden bei einem gattungsgemäßen Verbrennungsmotor Werte einer NOx-Speicheraktivität des NOx-Speicherkatalysators ermittelt, Werte einer NOx-Speicherkatalysatortemperatur und einer Vorkatalysatortemperatur ermittelt, Korrelationsmuster zwischen Werten der NOx-Speicheraktivität und Werten der Vorkatalysatortemperatur und der NOx-Speicherkatalysatortemperatur ermittelt, mit vorgegebenen Prüfmustern verglichen und aus dem Vergleichsergebnis ein Zustandssignal für den Vorkatalysator gebildet. Die Erfindung geht dabei von der Erkenntnis aus, dass bei einem geschädigten Vorkatalysator die NOx-Speicheraktivität eine gegenüber einem ungeschädigten Vorkatalysator veränderte Abhängigkeit von der Vorkatalysatortemperatur und der NOx-Speicherkatalysatortemperatur aufweist. Das erfindungsgemäße Verfahren ermöglicht die Herleitung eines differenzierten Schädigungsprofils des Abgassystems ohne zusätzliche Sensorik.

Ferner werden erfindungsgemäß Werte einer NOx-Speicheraktivität des NOx-Speicherkatalysators bei einem Wert einer NOx-Speicherkatalysatortemperatur innerhalb eines Diagnoseintervalls ermittelt, Werte einer Vorkatalysatortemperatur ermittelt, Korrelationsmuster zwischen Werten der NOx-Speicheraktivität und den Werten der Vorkatalysatortemperatur ermittelt, mit vorgegebenen Prüfmustern verglichen und aus dem Vergleichsergebnis ein Zustandssignal für den Vorkatalysator gebildet.

Die Erfindung geht auch hierbei von der Erkenntnis aus, dass bei einem Wert einer NOx-Speicherkatalysatortemperatur innerhalb des Diagnosetemperaturintervalls die ermittelte NOx-Speicheraktivität bei einem deaktivierten Vorkatalysator eine andere Temperaturabhängigkeit aufweist als bei einem nicht deaktivierten Vorkatalysator. Ermittelt man die Korrelationsmuster der Werte der NOx-Speicheraktivität mit den Werten der Vorkatalysatortemperatur, so erhält man für einen geschädigten Vorkatalysator andere Korrelationsmuster als für einen ungeschädigten Vorkatalysator. Durch den Vergleich der ermittelten Korrelationsmuster mit vorgegebenen Prüfmustern kann daher sehr einfach ein geschädigter Vorkatalysator erkannt werden. Dabei sind keine verbrauchserhöhenden Eingriffe in den Betrieb des Verbrennungsmotors und auch keine aufwendige Sensorik erforderlich.

Bei einer bevorzugten Ausführungsform der Erfindung werden die Werte der NOx-Speicheraktivität zumindest für in einem Hoch- und einem Tieftemperaturbereich von Vorkatalysator- und NOx-Speicherkatalysator liegenden Temperaturwerten ermittelt und zur Ermittlung der Korrelationsmuster herangezogen. Die Werte der NOx-Speicheraktivität werden in Abhängigkeit von ihrer Größe klassifiziert und aus den klassifizierten Werten eine die Korrelationsmuster darstellende Korrelationsmatrix gebildet, wobei die Hoch- und Tieftemperaturwerte von Vorkatalysator bzw. NOx-Speicherkatalysator Eingänge der NOx-Speicheraktivitätsmatrix sind. Auf diese Weise wird eine besonders einfache Darstellung und Auswertung der Korrelationsmuster erreicht.

Ferner wird bevorzugt bei einer vorgegebenen NOx-Speicherkatalysatortemperatur jeweils die Abweichung von Werten der NOx-Speicheraktivität in einem Tieftemperaturbereich und von Werten der NOx-Speicheraktivität in einem Hochtemperaturbereich mit vorgegebenen Prüfmustern ermittelt. Es wird dann das Verhältnis der Abweichung in dem Tieftemperaturbereich zu der Abweichung im Hochtemperaturbereich ermittelt und aus diesem Verhältnis auf die Kohlenwasserstoffkonvertierungseffizienz des Vorkatalysators geschlossen. Einer stärker wachsenden Abweichung in dem Tieftemperaturbereich gegenüber der Abweichung im Hochtemperaturbereich entspricht eine verringerte Kohlenwasserstoffkonvertierungseffizienz des Vorkatalysators.

Vorteilhaft werden die Werte der NOx-Speicheraktivität jeweils zumindest in einem Hoch- und einem Tieftemperaturbereich des Vorkatalysators ermittelt und aus hohen Werten der NOx-Speicheraktivität in dem Hochtemperaturbereich und niedrigen Werten der NOx-Speicheraktivität in dem Tieftemperaturbereich der Vorkatalysatortemperatur auf eine niedrige Kohlenwasserstoffkonvertierungsrate des Vorkatalysators geschlossen. Der Hochtemperaturbereich des Vorkatalysators entspricht dabei einer Abgastemperatur vor dem Vorkatalysator > 400' Celsius und der Tieftemperaturbereich der Vorkatalysatortemperatur einer Abgastemperatur vor dem Vorkatalysator < 320° Celsius. Hohe Werte der NOx-Speicheraktivität liegen hierbei bei 90 bis 95 % und niedrige Werte der NOx-Speicheraktivität bei 85 % und niedriger, jeweils bezogen auf die NOx-Speicherfähigkeit eines frischen ungeschädigten NOx-Speicherkatalysators.

Eine umfassende Diagnose des Abgasreinigungssystems, die auch eine Erkennung eines defekten NOx-Speicherkatalysators umfasst, wird erfindungsgemäß möglich, wenn aus niedrigen Werten der NOx-Speicheraktivität in einem Hochtemperaturbereich des Vorkatalysators auf einen defekten NOx-Speicherkatalysator geschlossen wird.

Bei der Ermittlung der NOx-Speicheraktivität ist vorzugsweise die Einhaltung vorbestimmter Betriebsbedingungen erforderlich, insbesondere der Katalysatorbeladung, der Katalysatortemperatur und des Lambdawerts. Wie an sich bereits aus dem Stand der Technik bekannt, erfolgt eine zuverlässige Überprüfung der NOx-Speicheraktivität vorzugsweise unter mageren Abgasbedingungen und in einem NOx-Speichertemperaturfenster, welches zwischen 200 und 600° Celsius liegt und insbesondere von der Katalysatorbeschichtung abhängig ist.

Bevorzugt wird erfindungsgemäß ein Vorkatalysator-Zustandssignal zur Steuerung des Verbrennungsmotors herangezogen, wobei eine Zulassung eines Magerbetriebs in Abhängigkeit von dem Zustandssignal erfolgt. Damit ist es möglich, den Verbrennungsmotor länger im verbrauchsgünstigen Magerbetrieb zu fahren und gleichzeitig vorgegebene Abgasgrenzwerte einzuhalten.

Da ein geschädigter Vorkatalysator bei einer ausreichend hohen Temperatur eine ausreichende Kohlenwasserstoffkonvertierungsrate aufweisen kann, wird eine Vorkatalysatorschwelltemperatur T^{s}ᵥₖ bestimmt. Solange die Vorkatalysatortemperatur > T^{s}ᵥₖ ist ein Eingriff in den Magerbetrieb des Verbrennungsmotors nicht vorgesehen. Bei einer Vorkatalysatortemperatur < T^{s}ᵥₖ muss ein Eingriff in den Magerbetrieb erfolgen, da andernfalls die Gefahr einer nicht ausreichenden Abgasreinigung besteht.

Insbesondere kann der Eingriff eine Einschränkung des Magerbetriebs beinhalten. Alternativ oder ergänzend kann auch die Vorkatalysatortemperatur über den Schwellwert T^{s}ᵥₖ erhöht werden. Ferner kann bei einer Vorkatalysatortemperatur oberhalb der Schwelltemperatur verhindert werden, dass die Schwelltemperatur unterschritten wird.

Die Schwelltemperatur T^{s}ᵥₖ kann im einfachsten Fall als Festwert gewählt werden, die bei einem als defekt erkannten Vorkatalysator vorgegeben ist. Eine genauere Anpassung an das Schädigungsprofil des Abgasreinigungssystems erhält man, wenn die Schwelltemperatur T^{s}ᵥₖ abhängig von den ermittelten Korrelationsmustern gewählt wird.

Eine andere bevorzugte Möglichkeit besteht darin, die Schwelltemperatur T^{s}ᵥₖ abhängig von der Differenz der NOx-Speicheraktivität bei hohen bzw. tiefen Vorkatalysatortemperaturen zu wählen.

Der Lambdawert oder die NOx-Abgaskonzentration des aus dem NOx-Speicherkatalysator ausströmenden Abgases werden stromabwärts des NOx-Speicherkatalysators durch einen Sensor, eine Lambdasonde oder einen NOx-Sensor oder ein Multifunktionssensor bestimmt und zur Ermittlung der NOx-Speicheraktivität herangezogen und so mit einem minimalen Sensoraufwand die Steuerung des Magerbetriebs und eine separate Vorkatalysatordiagnose verwirklicht. Zusätzlich kann stromaufwärts des Vorkatalysators oder des NOx-Speicherkatalysators eine weitere Lambdasonde angeordnet sein, mit der der Sauerstoffgehalt des einströmenden Abgases bestimmt und zur Ermittlung der NOx-Speicheraktivität herangezogen werden kann. In an sich bekannter Weise werden die Werte der Temperatur von Vorkatalysator und NOx-Speicherkatalysator mittels Temperatursensoren bestimmt, welche vorzugsweise katalysatornah im stromaufwärts der jeweiligen Katalysatoren angeordnet sind. Jedoch ist auch eine Modellierung der Vorkatalysatortemperatur und/oder der NOx-Speicherkatalysatortemperatur in Abhängigkeit von dem jeweiligen Betriebspunkt des Verbrennungsmotors möglich.

Ein erfindungsgemäßer magerlauffähiger Verbrennungsmotor zur Durchführung des erfindungsgemäßen Verfahrens umfasst entsprechend den unabhängigen Vorrichtungsansprüchen ein Motorsteuergerät mit einer an sich bekannten Überwachungseinrichtung für die NOx-Speicheraktivität des NOx-Speicherkatalysators. Erfindungsgemäß ist eine Vorkatalysator-Diagnosevorrichtung vorgesehen, der Werte einer Vorkatalysatortemperatur, Werte einer NOx-Speicherkatalysatortemperatur und Werte der NOx-Speicheraktivität zugeführt werden und die Korrelationsmuster zwischen der NOx-Speicheraktivität und den Werten der NOx-Speicherkatalysatortemperatur und den Werten der Vorkatalysatortemperatur ermittelt. Die Diagnosevorrichtung vergleicht diese Korrelationsmuster mit vorgegebenen Prüfmustern und bildet aus dem Vergleichsergebnis ein Zustandssignal, welches für die Kohlenwasserstoffkonversionsrate des Vorkatalysators charakteristisch ist.

Ein weiterer erfindungsgemäßer magerlauffähiger Verbrennungsmotor weist eine Vorkatalysatordiagnosevorrichtung auf, der bei einem Wert der NOx-Speicherkatalysatortemperatur innerhalb eines vorgegebenen Diagnoseintervalls Werte einer NOx-Speicheraktivität des NOx-Speicherkatalysators zugeführt und Werte einer Vorkatalysatortemperatur zugeführt werden und die Korrelationsmuster zwischen den Werten der NOx-Speicheraktivität und den Werten der Vorkatalysatortemperatur ermittelt. Aus dem Ergebnis eines Vergleichs zwischen den Korrelationsmustern und Prüfmustern wird ein Vorkatalysatorzustandssignal gebildet. Zur Absicherung gegen einen unzulässigen Emissionsanstieg kann vorgesehen werden, dass bei Überschreiten einer vorbestimmbaren Schädigungsschwelle des Vor- und/oder NOx-Speicherkatalysators der Magerbetrieb zugunsten des homogenstöchiometrischen Betriebs eingeschränkt oder vollständig unterdrückt wird.

Bevorzugte Ausführungsformen dieser erfindungsgemäßen Verbrennungsmotoren umfassen eine stromabwärts des NOx-Speicherkatalysators angeordnete Lambdasonde oder einen NOx-Sensor oder einen Multifunktionssensor, von denen der Überwachungsvorrichtung für die NOx-Speicheraktivität Sauerstoff- bzw. NOx-Konzentrationssignale zugeführt werden.

Weitere Merkmale und Vorteile der Erfindung ergeben sich nicht nur aus den zugehörigen Patentansprüchen - für sich oder in Kombination - sondern auch aus der nachfolgenden Beschreibung bevorzugter Ausführungsbeispiele in Verbindung mit den zugehörigen Zeichnungen. In den Zeichnungen zeigen:
- Figur 1: einen Verbrennungsmotor mit einem Abgasreinigungssystem,
- Figur 2: eine grafische Darstellung der relativen NOx-Speicheraktivität eines NOx-Speicherkatalysators, aufgetragen gegen eine Vorkatalysatortemperatur.

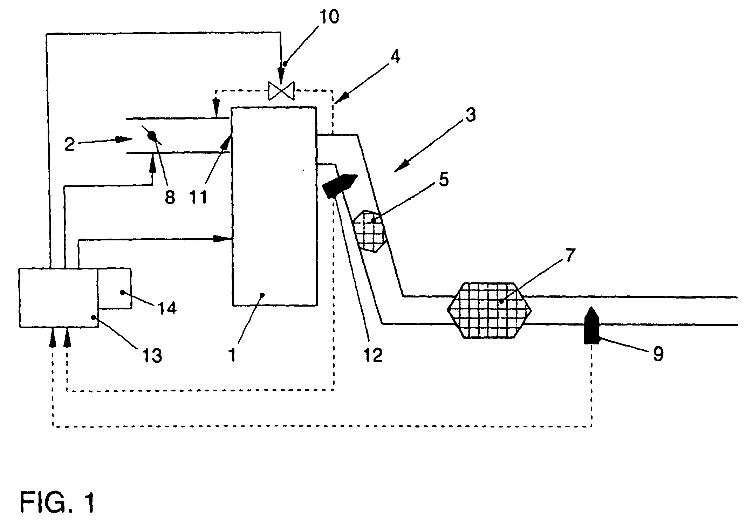

Der in Figur 1 dargestellte Verbrennungsmotor 1 ist vorzugsweise ein direkt einspritzender, insbesondere schichtladefähiger Otto-Motor oder ein Diesel-Motor. Der Verbrennungsmotor 1 hat einen Lufteinlasskanal 2 und ein Abgasreinigungssystem 3, von der eine Abgasrückführungsleitung 4 zu dem Lufteinlasskanal 2 führt. Mittels der Abgasrückführungsleitung 4 kann die NOx-Rohemission reduziert werden. Motornah ist in dem Abgasreinigungssystem 3 ein Vorkatalysator 5 angeordnet. Stromab des Vorkatalysators 5 ist ein NOx-Speicherkatalysator 7 angeordnet. Im Lufteinlasskanal 2 ist stromauf der Einmündung der Abgasrückführungsleitung 4 eine Drosselklappe 8 angeordnet, die beispielsweise mittels eines nicht dargestellten Stellmotors zu öffnen und zu schließen ist. Zur Kontrolle der von dem Abgasreinigungssystem 3 zu diesem Lufteinlass 11 zurückgeführten Abgasmenge ist ein Stellventil 10 in der Abgasrückführungsleitung 4 angeordnet. Zur Messung der Temperatur von Vorkatalysator 5 und NOx-Speicherkatalysator 7 sind in Figur 1 nicht dargestellte Temperatursensoren katalysatornah oder in den Vorkatalysatoren angeordnet.

Stromaufwärts des NOx-Speicherkatalysators 7 ist eine optionale Lambdasonde 12 in dem Abgasreinigungssystem 3 angeordnet, mit der der Sauerstoffgehalt des Abgases ermittelt werden kann. Die Signale der Lambdasonde 12 werden einem Motorsteuergerät 13 zugeführt, welches wiederum den Stellmotor der Lufteinlassdrossel 8 und des Stellventils 10 ansteuert. Ferner verarbeitet das Motorsteuergerät 13 weitere motorrelevante Werte wie beispielsweise die Drehzahl des Motors sowie den Lastwert und steuert Größen wie dem Motor zugeführte Kraftstoffmenge, einen Zündzeitpunkt, einen Einspritzbeginn oder ein Einspritzende.

Der Vorkatalysator 5 ist vorzugsweise optimiert zur Reinigung eines stöchiometrischen Abgases ausgelegt. In einer bevorzugten Ausführungsform ist der Vorkatalysator 5 als Drei-Wege-Katalysator ausgebildet, d. h. als geregelter Katalysator zur Konvertierung von Kohlenwasserstoffen, Kohlenmonoxyd und Stickoxyd. Bei einer Abgaszusammensetzung im Bereich von Lambda gleich 1. Der Vorkatalysator 5 wird vorzugsweise in einem vorgegebenen Temperaturfenster zwischen 200 Grad Celsius und 500 Grad Celsius betrieben, was allerdings abhängig vom Katalysatormaterial variieren kann.

Der NOx-Speicherkatalysator 7 ist in an sich bekannter Weise aufgebaut und wird in einem Speicher-Regenerationsbetrieb betrieben. Eine für einen Magerbetrieb zulässig hohe NOx-Konvertierung wird dabei nur in einem Magerbetriebstemperaturfenster erreicht, dessen untere und obere Grenzen von Alterungsprozessen abhängig sind. Bei einem ungeschädigten NOx-Speicherkatalysator liegt die untere Grenze bei circa 200 Grad Celsius und die obere Grenze bei 600 Grad Celsius. Stromab des NOx-Speicherkatalysators 7 ist ein Sensor 9, vorzugsweise eine Lambdasonde, ein NOx-Sensor oder ein Multifunktionssensor angeordnet, dessen Signale dem Motorsteuergerät 13 zugeführt werden. Aus den Informationen über den Lambdawert bzw. die NOx-Konzentration im aus dem NOx-Speicherkatalysator ausströmenden Abgas wird eine NOx-Speicheraktivität des NOx-Speicherkatalysators bestimmt. Zusätzlich werden optional hierzu Informationen über den Sauerstoffgehalt des in den Vorkatalysator 5 einströmenden Abgases herangezogen, die mittels einer dem Vorkatalysator 5 stromaufwärts vorgeschalteten Lambdasonde 12 ermittelt werden. Zusätzlich oder alternativ kann auch ein NOx-Sensor stromaufwärts des NOx-Speicherkatalysators angeordnet werden. Ferner können Informationen über die Stickoxydkonzentration bzw. den Sauerstoffgehalt des Abgases auch durch Modellierung unter Verwendung eines Kennfeldes berechnet werden.

Bei dem Betrieb des Verbrennungsmotors 1 ist ein verbrauchsgünstiger Magerbetrieb, insbesondere ein Schichtladebetrieb angestrebt, wobei jedoch durch das Abgasreinigungssystem 3 eine den vorgeschriebenen Abgasgrenzwerten entsprechende Gesamtemission an Schadstoffen, insbesondere Kohlenwasserstoffen (HC, Kohlenmonoxyd (CO) und Stickoxyd (NOx) gewährleistet werden muss.

Bei einer Kombination von Vorkatalysator und NOx-Speicherkatalysator besteht eine wesentliche Funktion des Vorkatalysators in einer Magerbetriebsphase in der Sicherung einer vorangeschalteten Stickstoffoxidation von NO zu NO2. Insbesondere bei niedrigen Abgas- und Katalysatortemperaturen, wie sie im Schichtbetrieb auftreten, wird bei Temperaturen von weniger als 350° Celsius die NO-NO2-Oxidation darüber hinaus in Anwesenheit von Kohlenwasserstoff massiv behindert. Die Folge hiervon ist wiederum eine geringere NOx-Einlagerungsrate, da nur NO2 und nicht das überwiegend im Rohabgas vorhandene NO entsprechende Komponenten des NOx-Speicherkatalysators eingelagert werden kann. Wird die Funktionsfähigkeit des NOx-Speicherkatalysators ohne Berücksichtigung einer durch einen defekten Vorkatalysator reduzierten Einlagerung von NOx aufgrund der NOx-Speicheraktivität ermittelt, kann dies zu einer suboptimalen Betriebsweise des magerlauffähigen Verbrennungsmotors führen, da die Temperaturgrenzen des Magerbetriebs zu stark eingeschränkt werden.

Dagegen ermöglicht die Berücksichtigung einer Vorkatalysatorschädigung mit daraus folgendem zu hohen Kohlenwasserstoffschlupf, den Magerbetriebsbereich gegenüber dem Stand der Technik zu vergrößern. Insbesondere ist eine generelle Sperrung des Magerbetriebs bei niedrigen NOx-Speicherkatalysatortemperaturen immer dann nicht erforderlich, wenn die geringe NOx-Speicheraktivität eine Folge einer geringen Vorkatalysatorkohlenwasserstoffkonvertierung ist. Die NOx-Speicheraktivität kann in diesem Fall durch Gewährleistung einer vorgegebenen Mindesttemperatur des Vorkatalysators erhöht werden, was aufgrund der motornahen Anordnung des Vorkatalysators und der üblicherweise geringen thermischen Trägheit des Vorkatalysators mit wesentlich geringerem Energieaufwand möglich ist als beispielsweise eine Erwärmung des NOx-Speicherkatalysators, um diesen in kleineren NOx-Speicherkatalysatorfenstern zu betreiben.

Bei dem erfindungsgemäßen Verfahren wird die Blockierung der Nu → NO2-Konversion bei einem geschädigten Vorkatalysator in einem niedrigen Temperaturbereich des NOx-Speicherkatalysators aufgrund einer erhöhten Kohlenwasserstoffkonzentration stromaufwärts des NOx-Speicherkatalysators zum Ausgangspunkt für die Ermittlung der Kohlenwasserstoffkonversionseffizienz bei einem vorgeschalteten Vorkatalysator genommen. Vorzugsweise werden von einem Zeitpunkt an, zu dem die Light-Off-Temperatur des Vorkatalysators überschritten wurde, innerhalb eines vorgegebenen Zeitintervalls die Vorkatalysatortemperaturen ermittelt. Ferner werden die Werte einer NOx-Speicherkatalysatortemperatur ermittelt. Vorzugsweise liegen die ermittelten Temperaturwerte in den Arbeitstemperaturfenstern der Katalysatoren, insbesondere an den Grenzbereichen dieser Fenster um eine ausreichende Repräsentanz zu sichern. Es werden zudem Werte der NOx-Speicheraktivität des NOx-Speicherkatalysators 7 ermittelt. Die Ermittlung der NOx-Speicheraktivität erfolgt mit an sich bekannten Methoden, beispielsweise über die Auswertung des Signals des stromabwärts des NOx-Speicherkatalysators 7 angeordneten Sensors. Ferner wird vorzugsweise hierbei auf die Einhaltung vorgegebener Betriebsbedingungen geachtet, beispielsweise für die NOx-Beladung und den Sauerstoffgehalt des Abgases während der Ermittlung der NOx-Speicheraktivität.

Da bei einem geschädigten Vorkatalysator die NOx-Speicheraktivität eine gegenüber einem ungeschädigten Vorkatalysator veränderte Abhängigkeit von der Vorkatalysatortemperatur und der NOx-Speicherkatalysatortemperatur aufweist, werden erfindungsgemäß Korrelationsmuster zwischen den Werten der NOx-Speicherkatalysatortemperatur, der Vorkatalysatortemperatur und der NOx-Speicheraktivität ermittelt und mit vorgegebenen Prüfmustern verglichen. Die vorgegebenen Prüfmuster sind charakteristisch für die Kohlenwasserstoffkonversionsrate des Vorkatalysators 5.

Für die Ermittlung der NOx-Speicheraktivität weist das Motorsteuergerät 13 eine an sich bekannte Überwachungseinrichtung auf. Die Ermittlung der Korrelationsmuster sowie der Vergleich mit den Prüfmustern wird von einer Vorkatalysatordiagnosevorrichtung 14 durchgeführt. Vorzugsweise sind die Prüfmuster in einem Kennfeld in der Diagnosevorrichtung 14 abgespeichert.

Bevorzugt werden die Korrelationsmuster durch eine Korrelationsmatrix dargestellt. Dabei werden die Werte der NOx-Speicheraktivität für in einem Hoch- und Tieftemperaturbereich von Vorkatalysator 5 bzw. NOx-Speicherkatalysator 7 ermittelt. Zur Ermittlung der Korrelationsmatrix werden die Werte in Abhängigkeit von ihrer Größe klassifiziert, so dass beispielsweise hohe, mittlere und niedrige Werte der NOx-Speicheraktivität auftreten. Die zugeordneten Hoch- und Tieftemperaturwerte von Vorkatalysator bzw. NOx-Speicherkatalysator sind Eingänge der Korrelationsmatrix. Die Prüfmuster werden in diesem Fall auch durch eine Matrix dargestellt. Im einfachsten Fall sind lediglich 2x2 Matrizen auszuwerten.

Bei einer etwas einfacheren Ausführungsform der Erfindung werden die Werte von Vorkatalysatortemperatur und NOx-Speicheraktivität bei einem Wert einer NOx-Speicherkatalysatortemperatur innerhalb eines vorgegebenen Diagnosetemperaturintervalls bestimmt. Der Wert der NOx-Speicherkatalysatortemperatur kann dabei um +- 10 K oder mehr schwanken. Auch hier wird ein Vergleich von Korrelationsmustern zwischen den Werten der NOx-Speicheraktivität und den Werten der Vorkatalysatortemperatur ermittelt, und es erfolgt ein Vergleich mit für die Kohlenwasserstoffkonversionseffizienz des Vorkatalysators charakteristischen Prüfmustern. Aus dem Vergleichsergebnis wird ein Vorkatalysator- Zustandssignal gebildet.

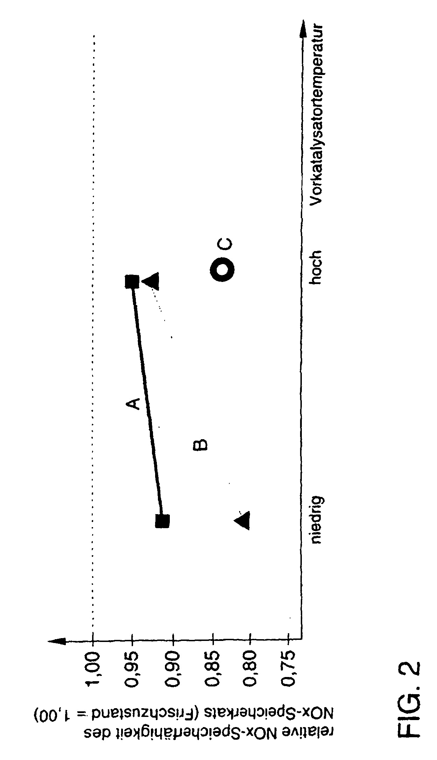

In Figur 2 ist zur Veranschaulichung der oben dargestellten Zusammenhänge die gemessene relative NOx-Speicherfähigkeit eines NOx-Speicherkatalysators gegenüber einer Vorkatalysatortemperatur schematisch dargestellt. Unter relativer NOx-Speicheraktivität wird dabei die ermittelte NOx-Speicheraktivität, bezogen auf einen frischen NOx-Speicherkatalysator, verstanden. "Hoch" bezeichnet hier eine Abgastemperatur vor dem Vorkatalysator > als 400 Grad Celsius und "niedrig" eine Abgastemperatur vor dem Vorkatalysator < 320 Grad Celsius. Das Diagramm beschreibt Messergebnisse an einem direkt einspritzenden 1,6 Liter Ottomotor mit einem nachgeschalteten 1,7 Liter großen NOx-Speicherkatalysator, der durch eine vorgeschaltete, unspezifische, künstliche Alterung bereits einen Aktivitätseinbruch erlitten hat und noch etwa 95 % der NOx-Speicherfähigkeit eines ungeschädigten frischen NOx-Speicherkatalysators aufweist. Als Vorkatalysator wurde ein ungeschädigter 0,45 Liter großer Metallkatalysator im dargestellten Fall A eingesetzt. Im dargestellten Fall B wurde ein gleiches Bauteil mit hydrothermaler Ofenalterung von 4 Stunden bei 1.100 Grad Celsius 2 % O2, 10 % H2O verwendet.

Die NOx-Speicherkatalysatortemperatur beträgt im Hochtemperaturbereich circa 350 Grad Celsius und im Niedrigtemperaturbereich circa 290 Grad Celsius. Die NOx-Speicherfähigkeit wurde über einen stromab des NOx-Speicherkatalysators angeordneten NOx-Sensor gemessen. Bei mehrfachen Wiederholungsmessungen wurde eine Streuung von +- 3 % in den angegebenen Werten gefunden.

Die Messergebnisse im Fall A bei einem ungeschädigten Vorkatalysator in Verbindung mit einem leicht gealterten NOx-Speicherkatalysator zeigen, dass bei hohen Temperaturen die NOx-Speicheraktivität bei etwa 95 % der NOx-Speicheraktivität eines ungeschädigten NOx-Speicherkatalysators liegt; bei niedrigen Temperaturen wird demgegenüber eine nur geringfügige Abnahme auf etwa 92 % gemessen.

Im Fall B, bei dem ein ofengealterter Vorkatalysator in Verbindung mit demselben leicht gealterten NOx-Speicherkatalysator wie im Fall A zum Einsatz kommt, liegt bei hohen Temperaturen die NOx-Speicheraktivität bei etwa 92 % der Speicherfähigkeit eines ungeschädigten NOx-Speicherkatalysators. Bei niedrigen Temperaturen wird eine sehr deutliche Abnahme der NOx-Speicheraktivität auf etwa 81 % gemessen.

Zur Bestimmung der Kohlenwasserstoffkonvertierungseffizienz des Vorkatalysators werden bei einer vorgegebenen NOx-Speicherkatalysatortemperatur Werte der NOx-Speicheraktivität in einem Tieftemperaturbereich mit den Werten bei Verwendung eines ungeschädigten Vorkatalysators, beispielsweise wie aus Fall A, verglichen und die Abweichung ermittelt. Ferner werden Werte der NOx-Speicheraktivität in einem Hochtemperaturbereich mit Werten bei einem ungeschädigten Vorkatalysator, wie beispielsweise bei Fall A, verglichen und ebenfalls die Abweichung ermittelt. Je größer die Abweichung im Tieftemperaturbereich relativ zur Abweichung im Hochtemperaturbereich ist, desto stärker ist die Kohlenwasserstoffkonvertierungseffizienz des Vorkatalysators vermindert. Daher kann aus dem Verhältnis der Abweichung in dem Tieftemperaturbereich zu der Abweichung im Hochtemperaturbereich auf die Kohlenwasserstoffkonvertierungseffizienz des Vorkatalysators geschlossen werden, wobei unabhängig von der Steigung der Geraden im Fall A die Zunahme der Steigung im Fall B gegenüber der im Fall A mit einer Schädigung des Vorkatalysators korreliert wird.

Figur 2 zeigt ferner einen Fall C, bei dem in einer anderen Messreihe ein Katalysatorsystem, bestehend aus einem wie oben beschriebenen ofengealterten Vorkatalysator und einem ebenfalls ofengealterten NOx-Speicherkatalysator, eingetragen ist. Der ofengealterte NOx-Speicherkatalysator wurde 4 Stunden bei 850 Grad Celsius, 2 % O2 und 10 % H2O gealtert.

In der Figur 2 kann als Diagnosepfad folgende Matrix auf Basis der NOx-Speicheraktivität entnommen werden:
Hohe Temperatur: NOx-Speicheraktivität hoch/Niedrige Temperatur: NOx-Speicheraktivität hoch → Katalysatorsystem in Ordnung
Hohe Temperatur: NOx-Speicheraktivität hoch/Niedrige Temperatur: NOx-Speicheraktivität niedrig → Vorkatalysator geschädigt
Hohe Temperatur: NOx-Speicheraktivität niedrig/Niedrige Temperatur: NOx-Speicheraktivität beliebig → zumindest NOx-Speicherkatalysator geschädigt.

Erfindungsgemäß wird in Abhängigkeit von dem Zustandssignal der Magerbetrieb des Verbrennungsmotors gesteuert. Beispielsweise ist im Fall A zur Gewährleistung der Emissionssicherheit keine Maßnahme zur Einschränkung des Magerbetriebs erforderlich. Im Fall C soll der Magerbetrieb bei sehr niedrigen NOx-Speicherkatalysatortemperaturen < 320 Grad Celsius, insbesondere 290 Grad Celsius, unterdrückt werden.

Im Fall B ist auch bei sehr niedrigen NOx-Speicherkatalysatortemperaturen von beispielsweise 260 bis 320 Grad Celsius von einer ausreichenden NOx-Speicheraktivität auszugehen, sofern das Abgas stromauf des NOx-Speicherkatalysators zumindest weitgehend kohlenwasserstofffrei ist. Da die Kohlenwasserstoff-Konvertierungseffizienz des Vorkatalysators wesentlich von der Vorkatalysatortemperatur abhängig ist, ist sicherzustellen, dass bei einer erkannten Vorkatalysatorschädigung eine vorgegebene Vorkatalysator-Mindesttemperatur T^{s}ᵥₖ für nicht länger als ein vorgegebenes Zeitintervall unterschritten wird.

Es wird daher bei einem geschädigten Vorkatalysator 5 eine Vorkatalysatorschwelltemperatur T^{s}ᵥₖ bestimmt und bei einer Vorkatalysatortemperatur < Tsvk ein Eingriff in den Magerbetrieb des Verbrennungsmotors 1 vorgenommen. Bei einer Vorkatalysatortemperatur > T^{s}ᵥₖ erfolgt kein Eingriff in den Magerbetrieb des Verbrennungsmotors, auch wenn die NOx-Speicherkatalysatortemperatur in einem niedrigen Temperaturbereich liegt.

Die Vorkatalysator-Schwelltemperatur T^{s}ᵥₖ kann unabhängig von den Werten der ermittelten NOx-Speicheraktivität als Festwert gewählt werden. Ferner kann T^{s}ᵥₖ als Variable dargestellt werden, die von den ermittelten Korrelationsmustern abhängig ist. Insbesondere können Korrelationsmuster, die bei etwa gleichen NOx-Speicherkatalysatortemperaturen, beispielsweise +- 10 K ermittelten NOx-Speicheraktivitätswerten und unterschiedlichen Vorkatalysatortemperaturen ermittelt werden, zur Grundlage der Bestimmung dieser Variablen gemacht werden. Die Temperatur T^{s}ᵥₖ kann in diesem Fall beispielsweise von der Steigung der Geraden abhängig gewählt werden. Alternativ wird T^{s}ᵥₖ mit der Differenz der NOx-Speicheraktivitätswerte bei hoher und niedriger Temperatur des Vorkatalysators korreliert.

Da der Vorkatalysator 5 motornäher angeordnet ist und gegenüber dem NOx-Speicherkatalysator 7 üblicherweise eine geringere thermische Trägheit aufweist, kann eine vorgegebene Mindesttemperatur mit einem geringeren Aufwand eingehalten werden als bei einem geschädigten NOx-Speicherkatalysator. Zur Erhöhung der Vorkatalysatortemperatur über den Schwellwert oder zur Verhinderung eines Unterschreitens der Schwelltemperatur kann beispielsweise der Magerbetrieb für kurze Zeit durch einen Betrieb mit einem fetten Gemisch unterbrochen werden. Alternativ können unter Beibehaltung des Magerbetriebs andere Abgas- und/oder vorkatalysatortemperatursteigernde Maßnahmen vorgesehen werden. An sich bekannt sind beispielsweise eine Änderung der Abgasrückführungsrate, eine Änderung der Androsselung, des Zündzeitpunktes, des Einspritzbeginns oder des Einspritzendes.

Das erfindungsgemäße Verfahren sowie der magerlauffähige Verbrennungsmotor zur Ausführung des Verfahrens ermöglichen eine gegenüber dem Stand der Technik erhöhte Verbrauchsminderung. Diese Verbrauchsminderung ist insbesondere bedeutsam, da sie bei niedrigen Abgas- und Katalysatortemperaturen greift, bei denen der Magerbetriebsanteil des Motors besonders hoch ist.

## Patentansprüche

1. Verfahren zum Betrieb eines magerlauffähigen Verbrennungsmotors mit einem Abgasreinigungssystem, welches einen Vorkatalysator und einen stromabwärts des Vorkatalysators angeordneten NOx-Speicherkatalysator aufweist, **dadurch gekennzeichnet, dass** Werte einer NOx-Speicheraktivität des NOx-Speicherkatalysators ermittelt, Werte einer NOx-Speicherkatalysatortemperatur und Werte einer Vorkatalysatortemperatur ermittelt werden, dass Korrelationsmuster zwischen der NOx-Speicheraktivität und den Werten der NOx-Speicherkatalysatortemperatur und den Werten der Vorkatalysatortemperatur ermittelt und mit vorgegebenen Prüfmustern verglichen werden und dass aus dem Vergleichsergebnis ein Vorkatalysator-Zustandssignal gebildet wird.

2. Verfahren nach Anspruch 1, **dadurch gekennzeichnet, dass** die Werte der NOx-Speicheraktivität jeweils zumindest für in Hoch- und Tieftemperaturbereichen von Vorkatalysator und NOx-Speicherkatalysator liegenden Temperaturwerten ermittelt und zur Bestimmung einer die Korrelationsmuster darstellende Korrelationsmatrix in Abhängigkeit von ihrer Größe klassifiziert werden, wobei die zugeordneten Hoch- und Tieftemperaturwerte von Vorkatalysator bzw. NOx-Speicherkatalysator Eingänge der Korrelationsmatrix sind.

3. Verfahren zum Betrieb eines magerlauffähigen Verbrennungsmotors mit einem Abgasreinigungssystem, welches einen Vorkatalysator und einen stromabwärts des Vorkatalysators angeordneten NOx-Speicherkatalysator aufweist, **dadurch gekennzeichnet, dass** bei einem Wert einer NOx-Speicherkatalysatortemperatur innerhalb eines vorgegebenen Diagnosetemperaturintervalls, vorzugsweise von +/- 10 K, Werte einer NOx-Speicheraktivität des NOx-Speicherkatalysators ermittelt, Werte einer Vorkatalysatortemperatur ermittelt und Korrelationsmuster zwischen den Werten der NOx-Speicheraktivität und den Werten der Vorkatalysatortemperatur ermittelt und mit vorgegebenen Prüfmustern verglichen werden und dass aus dem Vergleichsergebnis ein Vorkatalysator-Zustandssignal gebildet wird.

4. Verfahren nach einem der vorhergehenden Ansprüche, **dadurch gekennzeichnet, dass** bei einer vorgegebenen NOx-Speicherkatalysatortemperatur jeweils die Abweichung von Werten der NOx-Speicheraktivität in einem Tieftemperaturbereich und von Werten der NOx-Speicheraktivität in einem Hochtemperaturbereich von vorgegebenen Prüfmustern ermittelt wird, dass das Verhältnis der Abweichung in dem Tieftemperaturbereich zu der Abweichung in dem Hochtemperaturbereich ermittelt und aus diesem Verhältnis auf die Kohlenwasserstoffkonvertierungseffizienz des Vorkatalysators geschlossen wird.

5. Verfahren nach einem der vorhergehenden Ansprüche, **dadurch gekennzeichnet, dass** bei einer vorgegebenen NOx-Speicherkatalysatortemperatur aus hohen Werten der NOx-Speicheraktivität in einem Hochtemperaturbereich und niedrigen Werten der NOx-Speicheraktivität in einem Tieftemperaturbereich des Vorkatalysators auf eine verringerte Kohlenwasserstoffkonvertierungseffizienz des Vorkatalysators geschlossen wird.

6. Verfahren nach Anspruch 4 oder 5, **dadurch gekennzeichnet, dass** bei Unterschreitung einer vorgegebenen Mindest-Konversionsrate auf eine Schädigung des Vorkatalysators geschlossen wird.

7. Verfahren nach zumindest einem der vorhergehenden Ansprüche, **dadurch gekennzeichnet, dass** aus niedrigen Werten der NOx-Speicheraktivität in einem Hochtemperaturbereich des Vorkatalysators auf eine Schädigung des NOx-Speicherkatalysators geschlossen wird.

8. Verfahren nach zumindest einem der vorhergehenden Ansprüche, **dadurch gekennzeichnet, dass** in Abhängigkeit von dem Vorkatalysator-Zustandssignal eine Steuerung des Magerbetriebs des Verbrennungsmotors erfolgt.

9. Verfahren nach Anspruch 8, **dadurch gekennzeichnet, dass** bei einem geschädigten Vorkatalysator eine Vorkatalysatorschwelltemperatur T^{s}ᵥₖ bestimmt und bei einer Vorkatalysatortemperatur < T^{s}ᵥₖ ein Eingriff in den Magerbetrieb des Verbrennungsmotors erfolgt und dass bei einer Vorkatalysatortemperatur > T^{s}ᵥₖ kein Eingriff in den Magerbetrieb des Verbrennungsmotors erfolgt.

10. Verfahren nach Anspruch 9, **dadurch gekennzeichnet, dass** als Eingriff eine Einschränkung des Magerbetriebs vorgesehen ist.

11. Verfahren nach Anspruch 9, **dadurch gekennzeichnet, dass** als Eingriff in den Magerbetrieb eine Erhöhung der Vorkatalysatortemperatur T^{s}ᵥₖ über den Schwellwert T^{s}ᵥₖ vorgesehen ist.

12. Verfahren nach Anspruch 9, **dadurch gekennzeichnet, dass** der Eingriff in den Magerbetrieb Maßnahmen beinhaltet, um ein Unterschreiten der Schwelltemperatur T^{s}ᵥₖ durch die Vorkatalysatortemperatur zu verhindern.

13. Verfahren nach einem der Ansprüche 9 bis 12, **dadurch gekennzeichnet, dass** die Schwelltemperatur T^{s}ᵥₖ ein Festwert ist.

14. Verfahren einem der Ansprüche 9 bis 12, **dadurch gekennzeichnet, dass** die Schwelltemperatur T^{s}ᵥₖ von den ermittelten Korrelationsmustem abhängig gewählt wird.

15. Verfahren nach einem der Ansprüche 9 bis 12, **dadurch gekennzeichnet, dass** die Schwelltemperatur T^{s}ᵥₖ abhängig gewählt wird von der Differenz der NOx-Speicheraktivität bei einer Vorkatalysatortemperatur in einem Hoch- bzw. Tieftemperaturbereich.

16. Verfahren nach Anspruch 11 oder 12, **dadurch gekennzeichnet, dass** zur Beeinflussung der Vorkatalysatortemperatur eine oder mehrere der folgenden Maßnahmen vorgesehen sind:
- Änderung der Abgasrückführungsrate
- Änderung der Androsselung
- Änderung des Zündzeitpunktes
- Änderung des Einspritzbeginns
- Änderung des Einspritzenden.

17. Verfahren nach einem der vorhergehenden Ansprüche, **dadurch gekennzeichnet, dass** zur Ermittlung der NOx-Speicheraktivität stromabwärts ein Sensor, vorzugsweise ein NOx-Sensor oder eine Lambda-Sonde, angeordnet ist.

18. Verfahren nach Anspruch 17, **dadurch gekennzeichnet, dass** stromaufwärts des Vorkatalysators eine Lambdasonde angeordnet ist.

19. Verfahren nach zumindest einem der vorhergehenden Ansprüche, **dadurch gekennzeichnet, dass** zur Ermittlung der Vorkatalysatortemperatur stromaufwärts oder stromabwärts des Vorkatalysators ein Temperatursensor angeordnet ist.

20. Verfahren nach zumindest einem der vorhergehenden Ansprüche, **dadurch gekennzeichnet, dass** zur Ermittlung der NOx-Speicherkatalysatortemperatur stromaufwärts oder stromabwärts des NOx-Speicherkatalysators ein Temperatursensor angeordnet ist.

21. Magerlauffähiger Verbrennungsmotor mit einem Abgasreinigungssystem, welches einen Vorkatalysator und einen stromabwärts des Vorkatalysators angeordneten Speicherkatalysator aufweist und mit einem Motorsteuergerät mit einer Überwachungseinrichtung für die NOx-Speicheraktivität des NOx-Speicherkatalysators, **dadurch gekennzeichnet, dass** eine Vorkatalysator-Diagnosevorrichtung vorgesehen ist, der Werte einer Vorkatalysatortemperatur, Werte einer NOx-Speicherkatalysatortemperatur und Werte der NOx-Speicheraktivität zugeführt werden und die Korrelationsmuster zwischen der Speicheraktivität, den Werten der Speicherkatalysatortemperatur und den Werten der Vorkatalysatortemperatur ermittelt, die Korrelationsmuster mit vorgegebenen Prüfmustern vergleicht und aus dem Vergleichsergebnis ein Zustandssignal bildet.

22. Magerlauffähiger Verbrennungsmotor mit einem Abgasreinigungssystem, welches einen Vorkatalysator und einen stromabwärts des Vorkatalysators angeordneten Speicherkatalysator aufweist und mit einem Motorsteuergerät mit einer Überwachungseinrichtung für die NOx-Speicheraktivität des NOx-Speicherkatalysators, **dadurch gekennzeichnet, dass** eine Vorkatalysator-Diagnosevorrichtung vorgesehen ist, der bei einem Wert einer Speicherkatalysatortemperatur innerhalb eines vorgegebenen Diagnosetemperatur-Intervalls Werte einer Speicheraktivität des Speicherkatalysators und Werte einer Vorkatalysatortemperatur zugeführt werden, die Korrelationsmuster zwischen den Werten der Speicheraktivität und den Werten der Vorkatalysatortemperatur ermittelt, mit Prüfmustern vergleicht und aus dem Vergleichsergebnis ein Vorkatalysator-Zustandssignal bildet.

## Claims

1. Method for operating a lean-burn internal combustion engine having an emission control system which has a pre-catalyst and an NOx-storage catalyst arranged downstream of the pre-catalyst, **characterized in that** values of an NOx-storage activity of the NOx-storage catalyst are determined and values of an NOx-storage catalyst temperature and values of a pre-catalyst temperature are determined, **in that** correlation patterns between the NOx-storage activity and the values of the NOx-storage catalyst temperature and the values of the pre-catalyst temperature are determined and are compared with predetermined test patterns, and **in that** a pre-catalyst state signal is formed from the comparison result.

2. Method according to Claim 1, **characterized in that** the values of the NOx-storage activity are determined in each case at least for temperature values lying in high-temperature and low-temperature ranges of the pre-catalyst and NOx-storage catalyst and are classified as a function of their magnitude in order to determine a correlation matrix constituting the correlation pattern, the assigned high-temperature and low-temperature values of the pre-catalyst and NOx-storage catalyst respectively being inputs of the correlation matrix.

3. Method of operating a lean-burn internal combustion engine having an emission control system which has a pre-catalyst and an NOx-storage catalyst arranged downstream of the pre-catalyst, **characterized in that**, in the case of a value of an NOx-storage catalyst temperature within a predetermined diagnostic temperature interval, preferably of +/- 10 K, values of an NOx-storage activity of the NOx-storage catalyst are determined, values of a pre-catalyst temperature are determined and correlation patterns between the values of the NOx-storage activity and the values of the pre-catalyst temperature are determined and compared with predetermined test patterns, and **in that** a pre-catalyst state signal is formed from the comparison result.

4. Method according to one of the preceding claims, **characterized in that**, in the case of a predetermined NOx-storage catalyst temperature, in each case the deviation of values of the NOx-storage activity in a low-temperature range and of values of the NOx-storage activity in a high-temperature range from predetermined test patterns is determined, and **in that** the ratio of the deviation in the low-temperature range to the deviation in the high-temperature range is determined and the hydrocarbon conversion efficiency of the precatalyst is deduced from this ratio.

5. Method according to one of the preceding claims, **characterized in that**, in the case of a predetermined NOx-storage catalyst temperature, a reduced hydrocarbon conversion efficiency of the pre-catalyst is deduced from high values of the NOx-storage activity in a high-temperature range and low values of the NOx-storage activity in a low-temperature range of the pre-catalyst.

6. Method according to Claim 4 or 5, **characterized in that** a deterioration of the pre-catalyst is deduced in the case of the undershooting of a predetermined : minimum conversion rate.

7. Method according to at least one of the preceding claims, **characterized in that** a deterioration of the NOx-storage catalyst is deduced from low values of the NOx-storage activity in a high-temperature range of the pre-catalyst.

8. Method according to at least one of the preceding claims, **characterized in that** a control of the lean-burn operation of the internal combustion engine takes place as a function of the pre-catalyst state signal.

9. Method according to Claim 8, **characterized in that**, in the case of a deteriorated pre-catalyst, a pre-catalyst threshold temperature T^{s}ᵥₖ is determined and, in the case of a pre-catalyst temperature of < T^{s}ᵥₖ, action on the lean-burn operation of the internal combustion engine takes place, and **in that**, in the case of a pre-catalyst temperature of > T^{s}ᵥₖ, no action on the lean-burn operation of the internal combustion engine takes place.

10. Method according to Claim 9, **characterized in that** the action provided is a restriction of lean-burn operation.

11. Method according to Claim 9, **characterized in that** the action provided on lean-burn operation is an increase in the pre-catalyst temperature T^{s}ᵥₖ above the threshold value T^{s}ᵥₖ.

12. Method according to Claim 9, **characterized in that** the action on lean-burn operation involves measures for preventing the pre-catalyst temperature from undershooting the threshold temperature T^{s}ᵥₖ.

13. Method according to one of Claims 9 to 12, **characterized in that** the threshold temperature T^{s}ᵥₖ is a fixed value.

14. Method according to one of Claims 9 to 12, **characterized in that** the threshold temperature T^{s}ᵥₖ is selected as a function of the correlation patterns determined.

15. Method according to one of Claims 9 to 12, **characterized in that** the threshold temperature T^{s}ᵥₖ is selected as a function of the difference in the NOx-storage activity in the case of a pre-catalyst temperature in a high-temperature and a low-temperature range.

16. Method according to Claim 11 or 12, **characterized in that** one or more of the following measures are provided for influencing the pre-catalyst temperature:
- change in the exhaust-gas recirculation rate
- change in the throttling
- change in the ignition point
- change in the start of injection
- change in the end of injection.

17. Method according to one of the preceding claims, **characterized in that**, to determine the NOx-storage activity, a sensor, preferably an NOx sensor or a lambda probe, is arranged downstream.

18. Method according to Claim 17, **characterized in that** a lambda probe is arranged upstream of the pre-catalyst.

19. Method according to at least one of the preceding claims, **characterized in that**, to determine the pre-catalyst temperature, a temperature sensor is arranged upstream or downstream of the pre-catalyst.

20. Method according to at least one of the preceding claims, **characterized in that**, to determine the NOx-storage catalyst temperature, a temperature sensor is arranged upstream or downstream of the NOx-storage catalyst.

21. Lean-burn internal combustion engine having an emission control system which has a pre-catalyst and a storage catalyst arranged downstream of the pre-catalyst, and having an engine control unit with a monitoring device for the NOx-storage activity of the NOx-storage catalyst, **characterized in that** a pre-catalyst diagnostic device is provided, to which values of a pre-catalyst temperature, values of an NOx-storage catalyst temperature and values of the NOx-storage activity are supplied and which determines correlation patterns between the storage activity, the values of the storage catalyst temperature and the values of the pre-catalyst temperature, compares the correlation patterns with predetermined test patterns and forms a state signal from the comparison result.

22. Lean-burn internal combustion engine having an emission control system which has a pre-catalyst and a storage catalyst arranged downstream of the pre-catalyst, and having an engine control unit with a monitoring device for the NOx-storage activity of the NOx-storage catalyst, **characterized in that** a pre-catalyst diagnostic device is provided, to which, in the case of a value of a storage catalyst temperature within a predetermined diagnostic temperature interval, values of a storage activity of the storage catalyst and values of a pre-catalyst temperature are supplied and which determines the correlation patterns between the values of the storage activity and the values of the pre-catalyst temperature, compares them with test patterns and forms a pre-catalyst state signal from the comparison result.

## Revendications

1. Procédé de commande d'un moteur à combustion interne apte à fonctionner en conditions pauvres et doté d'un système d'épuration des gaz d'échappement qui présente un pré-catalyseur et un catalyseur à accumulation de NOₓ disposé en aval du pré-catalyseur, **caractérisé en ce que** les valeurs de l'activité d'accumulation des NOₓ du catalyseur à accumulation de NOₓ sont déterminées, **en ce que** les valeurs de la température du catalyseur à accumulation de NOₓ et les valeurs -de la température du pré-catalyseur sont déterminées, **en ce que** le motif de corrélation entre l'activité d'accumulation de NOₓ, les valeurs de la température du catalyseur à accumulation de NOₓ et les valeurs de la température du pré-catalyseur est déterminé et comparé avec des motifs de test prédéterminés et **en ce qu'**à partir des résultats de la comparaison, un signal d'état du pré-catalyseur est formé.

2. Procédé selon la revendication 1, **caractérisé en ce que** les valeurs de l'activité d'accumulation des NOₓ sont déterminées chaque fois au moins pour des valeurs de température situées dans des plages de hautes températures et dans des plages de basses températures du pré-catalyseur et du catalyseur à accumulation de NOₓ et sont classées en fonction de leur valeur pour déterminer une matrice de corrélation qui représente le motif de corrélation, les valeurs associées des hautes températures et des basses températures du pré-catalyseur et du catalyseur à accumulation de NOₓ formant les entrées de la matrice de corrélation.

3. Procédé d'utilisation d'un moteur à combustion interne apte à fonctionner en conditions pauvres et doté d'un système d'épuration des gaz d'échappement qui présente un pré-catalyseur et un catalyseur à accumulation de NOₓ disposé en aval du pré-catalyseur, **caractérisé en ce que** lorsque la valeur de la température du catalyseur à accumulation de NOₓ se trouve à l'intérieur d'un intervalle prédéterminé de températures de diagnostic, de préférence de +/- 10 K, les valeurs de l'activité d'accumulation des NOₓ du catalyseur à accumulation de NOₓ sont déterminées, les valeurs de la température du pré-catalyseur sont déterminées et le motif de corrélation entre les valeurs de l'activité d'accumulation des NOₓ et les valeurs de la température du pré-catalyseur est déterminé, est comparé à des motifs de test prédéterminés et un signal d'état du pré-catalyseur est déterminé en fonction du résultat de la comparaison.

4. Procédé selon l'une des revendications précédentes, **caractérisé en ce que** pour une température prédéterminée du catalyseur à accumulation de NOₓ, l'écart par rapport à des motifs de test prédéterminés de valeurs de l'activité d'accumulation des NOₓ dans une plage de basses températures et de valeurs de l'activité d'accumulation des NOₓ dans une plage de hautes températures est déterminé, **en ce que** le rapport entre l'écart dans la plage des basses températures et l'écart dans la plage des hautes températures est déterminé et qu'à partir de ce rapport, une conclusion est tirée sur l'efficacité de la conversion des hydrocarbures dans le pré-catalyseur.

5. Procédé selon l'une des revendications précédentes, **caractérisé en ce que** pour une température prédéterminée du catalyseur à accumulation de NOₓ, à partir de valeurs élevées de l'activité d'accumulation des NOₓ dans une plage de hautes températures et de basses valeurs de l'activité d'accumulation des NOₓ dans une plage de basses températures du pré-catalyseur, on conclut à une diminution de l'efficacité de la conversion des hydrocarbures dans le pré-catalyseur.

6. Procédé selon les revendications 4 ou 5, **caractérisé en ce que** lorsqu'un taux minium de conversion prédéterminé n'est pas atteint, on conclut à un endommagement du pré-catalyseur.

7. Procédé selon au moins l'une des revendications précédentes, **caractérisé en ce qu'**à partir de basses valeurs de l'activité d'accumulation des NOₓ dans une plage de hautes températures du pré-catalyseur, on conclut à un endommagement du catalyseur à accumulation de NOₓ.

8. Procédé selon au moins l'une des revendications précédentes, **caractérisé en ce qu'**en fonction du signal d'état du pré-catalyseur, on effectue une commande du fonctionnement en conditions pauvres du moteur à combustion interne.

9. Procédé selon la revendication 8, **caractérisé en ce que** lorsque le pré-catalyseur est endommagé, on détermine une température de seuil du pré-catalyseur T^{s}ᵥₖ, **en ce que** lorsque la température du pré-catalyseur est < T^{s}ᵥₖ, on agit sur le fonctionnement en conditions pauvres du moteur à combustion interne et **en ce que** lorsque la température du pré-catalyseur est > T^{s}ᵥₖ, on n'agit pas sur le fonctionnement en conditions pauvres du moteur à combustion interne.

10. Procédé selon la revendication 9, **caractérisé en ce que** l'action prévue est une restriction du fonctionnement en conditions pauvres.

11. Procédé selon la revendication 9, **caractérisé en ce que** l'action sur le fonctionnement en conditions pauvres est une augmentation de la température du pré-catalyseur T^{s}ᵥₖ au-dessus de la valeur de seuil T^{s}ᵥₖ.

12. Procédé selon la revendication 9, **caractérisé en ce que** l'action sur le fonctionnement en conditions pauvres comporte des dispositions qui visent à empêcher que la température de seuil T^{s}ᵥₖ soit dépassée par la température du pré-catalyseur.

13. Procédé selon l'une des revendications 9 à 12, **caractérisé en ce que** la température de seuil T^{s}ᵥₖ est une valeur fixe.

14. Procédé selon l'une des revendications 9 à 12, **caractérisé en ce que** la température de seuil T^{s}ᵥₖ est sélectionnée en fonction des motifs de corrélation qui ont été déterminés.

15. Procédé selon l'une des revendications 9 à 12, **caractérisé en ce que** la température de seuil T^{s}ᵥₖ est sélectionnée en fonction de la différence entre les activités d'accumulation des NOₓ lorsque la température du pré-catalyseur se trouve dans une plage de hautes températures et lorsqu'elle se trouve dans une plage de basses températures.

16. Procédé selon les revendications 11 ou 12, **caractérisé en ce que** pour agir sur la température du pré-catalyseur, on prévoit une ou plusieurs des dispositions suivantes :
- modification du taux de recyclage des gaz d'échappement,
- modification de l'étranglement,
- modification de l'instant d'allumage,
- modification du début de l'injection et
- modification de la fin de l'injection.

17. Procédé selon l'une des revendications précédentes, **caractérisé en ce que** pour déterminer l'activité d'accumulation des NOₓ, un détecteur et de préférence un détecteur de NOₓ ou une sonde lambda sont disposés en aval.

18. Procédé selon la revendication 17, **caractérisé en ce qu'**une sonde lambda est disposée en amont du pré-catalyseur.

19. Procédé selon au moins l'une des revendications précédentes, **caractérisé en ce que** pour déterminer la température du pré-catalyseur, une sonde de température est disposée en amont ou en aval du pré-catalyseur.

20. Procédé selon au moins l'une des revendications précédentes, **caractérisé en ce que** pour déterminer la température du catalyseur à accumulation de NOₓ, une sonde de température est disposée en amont ou en aval du catalyseur à accumulation de NOₓ.

21. Moteur à combustion interne apte à fonctionner en conditions pauvres, qui est doté d'un système d'épuration des gaz d'échappement qui présente un pré-catalyseur et un catalyseur à accumulation disposé en aval du pré-catalyseur et qui est doté d'un appareil de commande du moteur qui présente un dispositif de surveillance de l'activité d'accumulation des NOₓ du catalyseur à accumulation de NOₓ, **caractérisé en ce qu'**est prévu un dispositif de diagnostic du pré-catalyseur auquel sont transmises les valeurs de la température du pré-catalyseur, les valeurs de la température du catalyseur à accumulation de NOₓ et les valeurs de l'activité d'accumulation de NOₓ et qui détermine le motif de corrélation entre l'activité d'accumulation, les valeurs de la température du catalyseur à accumulation et les valeurs de la température du pré-catalyseur, qui compare les motifs de corrélation à des motifs de test prédéterminés et qui forme un signal d'état à partir du résultat de la comparaison.

22. Moteur à combustion interne apte à fonctionner en conditions pauvres, qui est doté d'un système d'épuration des gaz qui présente un pré-catalyseur et un catalyseur à accumulation disposé en aval du pré-catalyseur et qui est doté d'un appareil de commande du moteur qui présente un dispositif de surveillance de l'activité d'accumulation des NOₓ du catalyseur à accumulation de NOₓ, **caractérisé en ce qu'**est prévu un dispositif de diagnostic du pré-catalyseur auquel, lorsque la valeur de la température du catalyseur à accumulation est située à l'intérieur d'un intervalle prédéterminé de températures de diagnostic, la valeur de l'activité d'accumulation du catalyseur à accumulation et la valeur de la température du pré-catalyseur sont transmises, qui détermine des motifs de corrélation entre les valeurs de l'activité d'accumulation et les valeurs de la température du pré-catalyseur, les compare à des motifs de test et forme à partir des résultats de la comparaison un signal d'état du pré-catalyseur.
